# EUROPEAN PATENT APPLICATION

(11) **EP 4 787 742 A1**
(43) Date of publication of application: **05.08.2026**
(21) Application number: 25155793.0
(22) Date of filing: 04.02.2025
(51) Int. Cl.: H04B 17/345, H04W 52/24, H04W 72/541

(54) **SIGNALING FOR CROSS-INTERFERENCE REDUCTION**

(71) Applicant: Vestel Elektronik Sanayi ve Ticaret A.S., 45030 Manisa (TR)
(72) Inventor: AYGÜL, Mehmet Ali, 45030 Manisa (TR); ARSLAN, Hüseyin, 34810 Istanbul (TR)
(74) Representative: Grünecker Patent- und Rechtsanwälte PartG mbB

(57) **Abstract**

The present disclosure relates to support for interference reduction in a communication and/or sensing network. In particular, a node determines an interference status information regarding interference currently experienced by the wireless device, and an interference tolerance information indicating a requirement of the wireless device concerning interference. Then the node transmits the interference status information and the interference tolerance information to a central node for interference mitigation control.

## Description

The present disclosure relates to signaling supporting reduction of interference in a communication and/or sensing system. In particular the present disclosure provides methods and apparatuses supporting such interference reduction.

### BACKGROUND

The integration of sensing functionality is emerging as a desired feature for future wireless radio access technologies such as beyond fifth generation (5G), sixth generation (6G), and Institute for Electrical and Electronics Engineers, IEEE, 802.11bf.

One possible approach for this goal is to utilize a communication waveform for dual functionalities of communication and radar-sensing performance. Recent research has explored the potential of Integrated Sensing and Communication (ISAC) across different approaches, including multi-antenna beamforming, waveform design, resource allocation and the like. Among these approaches, multi-antenna beamforming stands out, as it enables multiple signal-carrying beams to be directed toward both communication devices and sensing targets. ISAC can be achieved by leveraging the spatial dimensions of multi-antenna base stations (BSs), where a BS transmits beamformed signals decoded by communication devices and also reflected back to the BS by sensing targets. This approach supports simultaneous multi-user communications and multi-target radar sensing, possibly within the same frequency band. To perform both functions efficiently with shared spatial and power resources at the BS, an efficient beamforming design within the ISAC framework would be desirable.

ISAC has been recognized as one of the technologies that may be relevant for beyond 5^{th} generation (B5G) and 6^{th} generation (6G) wireless communication services that require sensing the environment, such as supporting autonomous vehicles, intelligent traffic monitoring, environmental monitoring, enhanced localization and tracking, and the Internet of Things (IoT) in 6G wireless networks. ISAC integrates sensing and communication functions into a joint design to exploit their mutual benefit via seamless collaboration and to optimize the use of wireless resources. In ISAC, a single transmission serves to deliver information to communication devices while simultaneously detecting targets. By enabling the shared use of a unified spectrum, waveforms, hardware (e.g., antenna and radio frequency front-end), and signal processing framework for both radar and communication functions, ISAC may facilitate mitigation of spectrum scarcity and enhance spectral efficiency and energy efficiency (EE).

Through co-design, ISAC may provide communication-assisted sensing and/or sensing-assisted communication.

On the other hand, interference may deteriorate performance in communication and/or sensing applications. Thus, it may be desirable to provide means for reducing interference.

### SUMMARY

Methods and techniques are described herein for facilitating interference mitigation.

The invention is defined by the independent claims. Some exemplary implementations are provided by the dependent claims.

For example, a method is provided for determining an interference status information regarding interference currently experienced by the wireless device, and an interference tolerance information indicating a requirement of the wireless device concerning interference; and for transmitting the interference status information and the interference tolerance information to a central node for interference mitigation control.

Further methods, apparatuses, and programs are provided as is described herein.

These and other features and characteristics of the presently disclosed subject matter, as well as the methods of operation and functions of the related elements of structures and the combination of parts and economies of manufacture, will become more apparent upon consideration of the following description and the appended claims with reference to the accompanying drawings, all of which form a part of this specification. It is to be expressly understood, however, that the drawings are for the purpose of illustration and description only and are not intended as a definition of the limits of the disclosed subject matter. As used in the specification and the claims, the singular form of "a," "an," and "the" include plural referents unless the context clearly dictates otherwise.

### BRIEF DESCRIPTION OF DRAWINGS

An understanding of the nature and advantages of various embodiments may be realized by reference to the following figures.
- FIG. 1: is a block diagram illustrating a communication and/or sensing system with a transmitter and a receiver.
- FIG. 2: is a block diagram illustrating exemplary devices and signals exchanged between them in an integrated sensing and communication system.
- FIG. 3: is a schematic drawing illustrating a scenario of interference between a wireless device (e.g. a user equipment) and a base station, and specifically the base station generating interference for the wireless device.
- FIG. 4: is a schematic drawing illustrating a scenario of self-interference (between the transmitter and the receiver) of a base station.
- FIG. 5: is a schematic drawing illustrating a scenario of interference between two base station serving adjacent cells.
- FIG. 6: is a schematic drawing illustrating a scenario of interference between a wireless device (e.g. a user equipment) and a base station, and specifically the wireless device generating interference for the base station.
- FIG. 7: is a schematic drawing illustrating a scenario of self-interference (between the transmitter and the receiver) of a wireless device (such as user equipment).
- FIG. 8: is a schematic drawing illustrating a scenario of interference between two wireless user devices.
- FIG. 9: is a message diagram showing methods performed by a victim node, aggressor node and sensing function for mitigating interference.
- FIG. 10: is a schematic drawing illustrating a scenario of interference caused by sensing RS (reference signal) transmission of a neighboring cell.
- FIG. 11: is a schematic drawing illustrating channel quality feedback reporting related to communication channel and sensing.
- FIG. 12: is a block diagram illustrating an exemplary structure of a wireless (user) device.
- FIG. 13: is a block diagram illustrating functional modules implemented by memory and processing circuitry or a wireless (user) device.
- FIG. 14: is a message diagram showing methods performed by a victim node, aggressor node and sensing function for mitigating interference including conveying interference tolerance information.
- FIG. 15: is a block diagram illustrating an exemplary structure of a wireless central node (e.g. a base station).
- FIG. 16: is a block diagram illustrating functional modules implemented by memory and processing circuitry implemented by a central node (e.g. a base station).

Like reference numbers and symbols in the various figures indicate like elements, in accordance with certain example implementations.

### DETAILED DESCRIPTION

For purposes of the description hereinafter, the terms "end," "upper," "lower," "right," "left," "vertical," "horizontal," "top," "bottom," "lateral," "longitudinal," and derivatives thereof shall relate to the disclosed subject matter as it is oriented in the drawing figures. However, it is to be understood that the disclosed subject matter may assume various alternative variations and step sequences, except where expressly specified to the contrary. It is also to be understood that the specific devices and processes illustrated in the attached drawings, and described in the following specification, are simply exemplary embodiments or aspects of the disclosed subject matter. Hence, specific dimensions and other physical characteristics related to the embodiments or aspects disclosed herein are not to be considered as limiting unless otherwise indicated.

No aspect, component, element, structure, act, step, function, instruction, and/or the like used herein should be construed as critical or essential unless explicitly described as such. Also, as used herein, the articles "a" and "an" are intended to include one or more items and may be used interchangeably with "one or more" and "at least one." Furthermore, as used herein, the term "set" is intended to include one or more items (e.g., related items, unrelated items, a combination of related and unrelated items, and/or the like) and may be used interchangeably with "one or more" or "at least one." Where only one item is intended, the term "one" or similar language is used. Also, as used herein, the terms "has," "have," "having," or the like are intended to be open-ended terms. Further, the phrase "based on" is intended to mean "based at least partially on" unless explicitly stated otherwise.

### Communication and sensing system

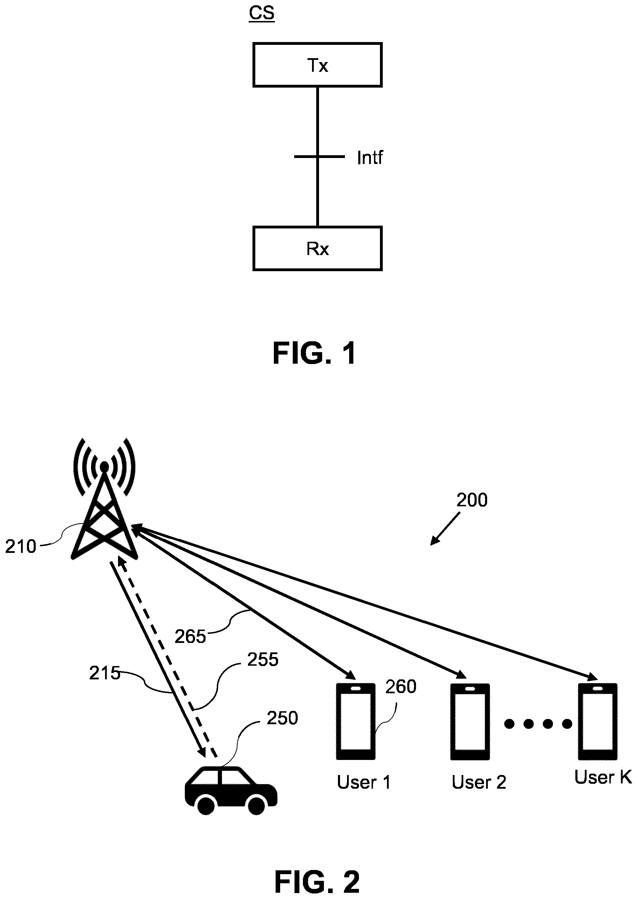

Fig. 1 illustrates an exemplary communications system CS in which Tx represents a transmitter and Rx represents a receiver of a wireless signal. The transmitter Tx is capable of transmitting a signal to the receiver Rx or to a group of receivers or to broadcast a signal over an interface Intf. The interface Intf may be for example any wireless interface. The interface Intf may be specified by means of resources, which can be used for the transmission and reception by the transmitter Tx and the receiver Rx. Such resources may be defined in one or more (or all) of the time domain, frequency domain, code domain, and space domain (e.g. beams). It is noted that in general, the transmitter Tx and receiver Rx may be also both integrated into the same device Tx+Rx. In other words, the devices Tx and Rx in Fig. 1 may respectively also include the functionality of the Rx and Tx.

The present disclosure is not limited to any particular transmitter Tx, receiver Rx and/or interface Intf implementation. However, it may be applied readily to some existing communication systems as well as to the extensions of such systems, or to new communication systems. Exemplary existing communication systems may be, for instance the 5G New Radio (NR) in its current or future releases, 6G systems, and/or the IEEE 802.11 based systems (referred to as WiFi) such as the recently studied IEEE 802.11 be or the broadly employed IEEE 802.11ac, IEEE 802.11ax, or IEEE 802.11ay or the like. Moreover, the transmitter and/or the receiver may support precoding and beamforming. For example, the interface Intf may be a MIMO interface. One transmitter and/or receiver may communicate with a plurality of other transmitters/receivers and may be implemented in a MU-MIMO setup in uplink and/or downlink.

Correspondingly, in the present disclosure, the term base station is not limited to a base station of a cellular telecommunications network such as an eNB in the Long Term Evolution (LTE) of the 4^{th} generation (4G) or a gNB in the New Radio (NR) of the 5^{th} generation (5G) or the like. Rather, the term base station denotes any node that enables wireless access to one or more stations that may themselves be base stations or user equipment (UE). For example, an access point of a Wi-Fi standard is also understood as a base station. A base station may include capability of connecting UEs to a network. For example, in 4G and 5G, a base station connects UEs to a 4G or 5G core network and in Wi-Fi standards, the access point may connect UEs (STAs) to internet.

When referring to a STA or user or a user station, the terms are not limited to devices supporting Wi-Fi. Rather, the term comprises more generally user equipment of any kind, such as the user equipment (UE) defined within the 3GPP framework or any terminal device capable of wireless communication. The transmitter Tx and the receiver Rx may be an access point and a STA respectively in downlink. Although Fig. 1 shows a simplified communication system with one transmitter and one receiver, the present disclosure is applicable to systems in which there are multiple transmitters and receivers communicating with each other in uplink (UE to BS) or downlink (BS to UE).

An exemplary system 200 including a plurality of devices that may implement communication and sensing capabilities is shown in Fig. 2. The system 200 includes a base station 210 which integrates an ISAC transceiver capable of communication and of sensing. It is noted that the ISAC framework is sometimes referred to as joint sensing and communication (JSAC) or given other names. Communication in the system 200 may be performed as described with reference to Fig. 1. When referring to sensing, what is meant is receiving a signal reflected from a sensing target. Such receiving comprises processing for detecting the sensing signal in the received signal and, possibly, estimating a location of the sensing target accordingly. Sensing may be performed by the same device that transmitted the signal which got reflected back. However, sensing may also be performed collaboratively, by a first device transmitting the sensing signal and a second device detecting it after reflection from an object.

In the ISAC system 200, there are further one or more communication devices. Fig. 2 illustrates K communication devices and denotes a communication device with reference sign 260. The base station 210 communicates with each communication device 260 with a signal 265 in uplink and/or downlink. For example, the base station 210 is capable of communicating with each communication device 260 via a standardized interface such as LTE, NR, or WiFi or the like. Moreover, the base station 210 is capable of sensing a sensing target 250. Specifically, the base station 210 transmits a sensing beam 215. The sensing beam 215 arrives at the sensing target 250 and at least part 255 of the sensing beam 215 is reflected on the sensing target 250 back to the base station 210. The base station is capable of detecting the reflected beam 255 and determining based thereon the location of the sensing target 250. For example, based on the angle of arrival of the reflected beam 255, the base station may determine the angle towards the location of the sensing target. Based on the received signal strength and / or signal phase, the range (distance to the sensing target) may be determined. Moreover, the base station may determine (e.g. based on the Doppler shift) velocity of the sensing target.

In Fig. 2, the sensing target 250 is illustrated as a car, but it is noted that the sensing target ay be any kind of vehicle or any other object that reflects the sensing beam. In Fig. 2, there is one sensing target illustrated and K communication devices. However, the present disclosure is not limited to such scenario. In general, there may be J sensing targets and K users, with J being an integer larger than 0 and K being an integer larger than zero. It is further noted that sensing targets and communication devices may be co-located in practise, e.g. a user with a mobile device driving a car or the like. It is advantageous for a base station to comprise more than one antennas in order to perform the sensing and the communication. For example, the base station 210 may comprise an array or a matrix of transmission and/or reception antennas. For instance. Thus, in general, the base station may have multiple antennas. The communication devices 260 may have one or more antennas.

Regarding limitations, in most applications, power to be used for transmission may be limited. On the other hand, a relatively high-power main beams may be necessary for target detection to ensure high quality sensing and/or cover a certain range (distance). One of the applications of the ISAC may be for instance 6th generation (6G) applications such as autonomous driving in vehicle-to-everything (V2X) communications, vehicle-to-infrastructure (V2I) networks, connected automated vehicles (CAVs), smart traffic management, augmented/ virtual reality (AR/VR), smart homes, unmanned aerial vehicles (UAVs), and industrial automation. The demand for systems that can provide both high data rate communication and accurate sensing (or localization) services has been increasing. On the other hand, with the rapid expansion of wireless devices, the wireless spectrum is becoming an increasingly valuable resource. Therefore, methods are needed for utilizing higher-frequency spectrum bands, such as millimeter wave bands, or for reusing/sharing spectrum used for other applications and systems, such as radar technology. In addition, the communication spectrum in next-generation mobile networks is shifting toward the millimeter-wave band, which will overlap with the traditional sensing spectrum. The sensing and communication systems are advancing toward higher frequency bands and larger antenna arrays, leading to notable similarities in hardware architecture and signal processing techniques. Accommodating more communication and/or sensing users in shared resource space may lead to increased interference.

For example, in ISAC systems, supporting certain use cases, such as safe and efficient UAV transport, may require adjusting the BS antenna tilt upward (i.e., reducing the down-tilt) to direct the main lobe higher into the sky. This adjustment is necessary as UAVs typically operate at higher altitudes than ground-based users, whereas conventional BS antennas are usually down-tilted. However, this adjustment can cause significant interference in the existing communication system. Furthermore, in mono-static sensing mode, simultaneous uplink and downlink transmission on the same frequency may lead to severe self-interference and cross-link interference. Therefore, it is necessary to implement effective interference suppression and elimination techniques.

### Types of interference

Generally, interference in ISAC systems can be categorized into six types: a) BS self-interference, b) BS-to-BS interference, c) BS-to-UE interference, d) UE-to-BS interference, e) UE self-interference, and f) UE-to-UE interference. The details of these interference types are provided below. (These interference types have been discussed in the ETSI ISAC standardization group.)

### a) BS-to-UE interference

BS-to-UE interference is similar to the downlink (DL) interference type observed in legacy Time Division Duplex (TDD) networks with a static UL/DL configuration. However, in ISAC systems, the BS-to-UE interference can be more severe due to the simultaneous sensing and communication functions.

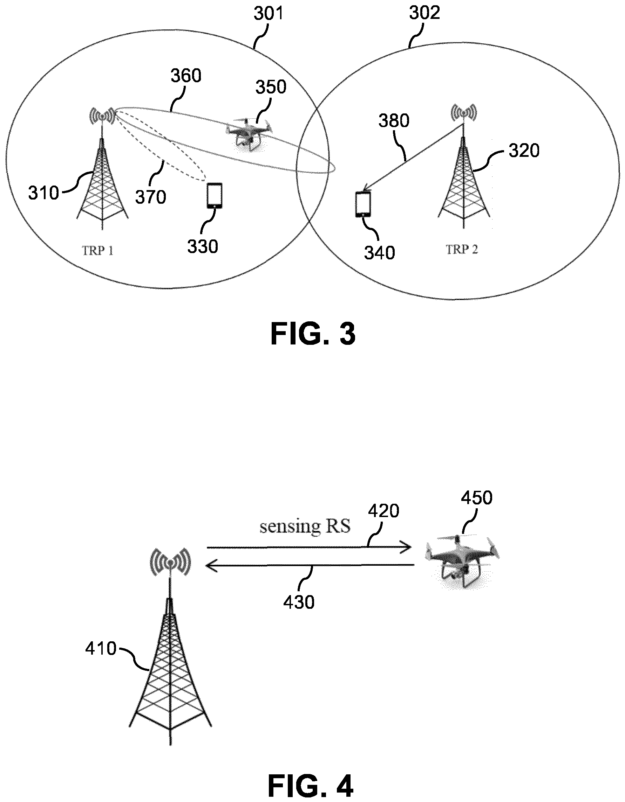

Fig. 3 shows an example where DL sensing reference signal (RS) 360 transmissions from an adjacent cell 301 interfere with a UE's communication signal/channel(s) 380. As shown, when detecting or tracking a UAV 350, the coverage areas for sensing and communication may differ. For example, a DL sensing RS 360 transmitted by a first Transmission-Reception Point (TRP1) 310 and intended for low-altitude airspace 350 could interfere with a UE 340 located within the coverage of a second TRP (TRP2) 320.

In particular, in the case of interference between sensing and communication, two scenarios may occur. In a first scenario, a DL sensing RS transmission 360 in an adjacent cell 301 may interfere with a DL communication signal/channel(s) reception 380 of a UE 340 (as shown in Fig. 3). In a second scenario, a DL communication signal transmission 370 in the adjacent cells 301 may interfere with the DL sensing RS reception of a UE 340.

In the case of interference between different sensing nodes, a DL sensing RS transmission 350 from one TRP 310 may interfere with a DL sensing RS reception (from another TRP 320) of a UE 340.

In general, as the BS electronic down-tilt angle decreases (for low altitude airspace), the interference to UEs in a neighboring cell increases, leading to a higher interference level, as indicated by the Reference Signal Received Power (RSRP) measurement of the received signal.

### b) BS self-interference

In BS mono-static sensing mode shown in Fig. 4, a BS 410 transmits 420 and receives 430 the sensing RS simultaneously, similar to a radar-like sensing. The signal that travels directly from the transmitting (Tx) antenna to the receiving (Rx) antenna is classified as self-interference, whereas the signal reflected, scattered, or diffracted by the environment or by a target 450 is considered useful for sensing.

### c) BS-to-BS interference

BS-to-BS interference 560 refers to interference occurring between two BS 510, 520, e.g. due to overlapping coverage areas 501 and 502 and/or shared frequency resources. In ISAC systems, where both communication and sensing functions are integrated, two main cases need to be considered: Interference between sensing and communication and Interference between sensing nodes.

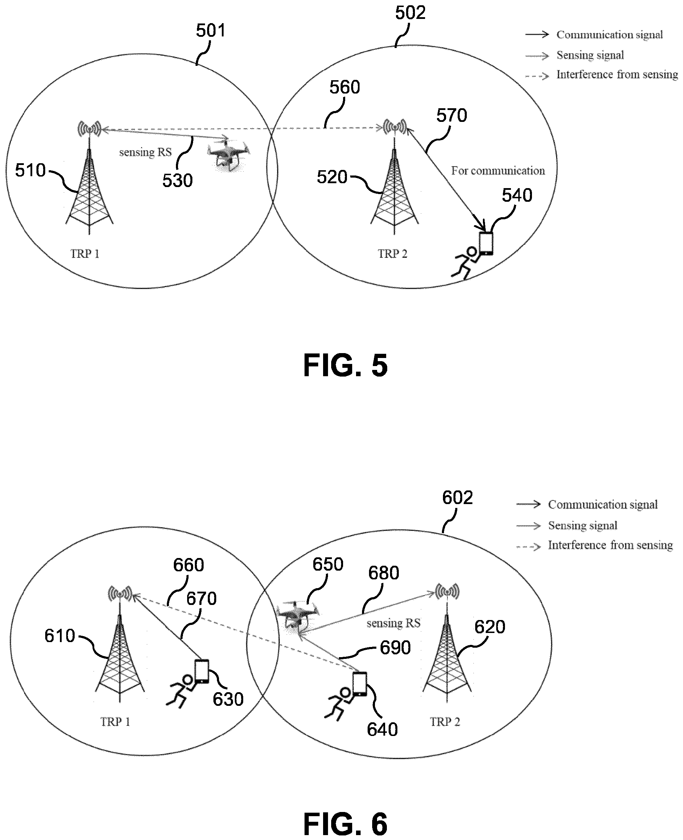

The interference between sensing and communication can occur in two scenarios. In a first scenario, DL sensing RS 530 transmission from TRP1 510 in cell 501 can interfere with the UL communication signal/channel(s) reception 570 at TRP2 520 in an adjacent cell 502 (shown in Fig. 5). In a second scenario, a DL communication signal/channel(s) transmission 570 from TRP2 520 in cell 502 can interfere with the UL sensing RS reception 530 at TRP1 510 in the adjacent cell 501.

The interference between sensing nodes can occur in two scenarios. In a first scenario, DL sensing RS 530 transmission from TRP1 510 can interfere with the UL sensing RS reception at TRP2 520, leading to sensing inaccuracies. In a second scenario, when two BSs 510 and 520 operate in mono-static sensing mode, they may interfere 560 with each other, as both simultaneously transmit and receive sensing RS within the same frequency range.

### d) UE-to-BS interference

UE-to-BS interference is illustrated in Fig. 6 and refers to the interference caused by UE (630, 640)transmissions affecting BS (610, 620) operations or vice versa. A TRP (610, 620) receiving UL signals or channels (e.g. 670) may experience interference from UL transmissions in adjacent cells (e.g. 690). Specifically, two types of interference can occur: Interference between sensing and communication, and interference between different sensing nodes. In case of interference between sensing and communication, in a first scenario, UL sensing RS transmission 690 can interfere 660 with the UL communication signal/channel(s) reception 670 at TRP1 610 (as shown in Fig. 6). In a second scenario, an UL communication signal/channel(s) transmission can interfere with UL sensing RS reception at TRP2.

In case of interference between different sensing nodes, UL sensing RS transmissions from adjacent cells (e.g. 602) can interfere with the UL sensing RS reception at a TRP1 610.

### e) UE self-interference

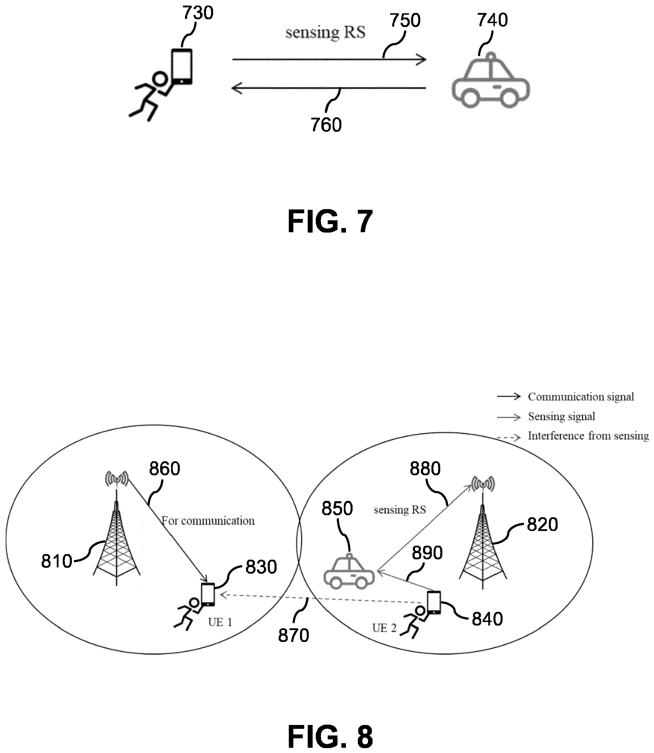

UE self-interference is illustrated in Fig. 7 and occurs when a UE 730 experiences signal degradation due to interference from its own transmissions 750 or reflections 760.

In UE mono-static sensing mode, the UE is required to transmit 750 and receive 760 the sensing RS simultaneously. The signal that leaks directly from the Tx antenna to the Rx antenna within the same UE causes self-interference, while the signal that is reflected, scattered, or diffracted by the environment or the target 740 is considered useful for sensing.

### f) UE-to-UE interference

A UE receiving DL/SL signal/channel(s) may experience interference caused by UL/sidelink (UL/SL) transmissions in the adjacent cells. Specifically, two types of interference can occur: Interference between sensing and communication and interference between different sensing nodes. Interference between sensing and communication is illustrated in Fig. 8 in two scenarios. In a first scenario, UL/SL sensing RS 890 transmissions from adjacent cells can interfere 870 with the DL/SL (side link) communication signal/channel(s) 860 reception at a UE 830. In a second scenario, UUSL communication signal/channel 860 transmissions from adjacent cells can interfere with the DL/SL sensing RS reception at a UE 840.

In case of interference between different sensing nodes, UUSL sensing RS transmissions from adjacent cells can interfere with the DL/SL sensing RS reception at a UE.

In summary, ISAC systems experience multiple types of interference, including self-interference and cross-interference, and interference between communication and sensing functions. To ensure optimal performance and reliability for both sensing and communication, interference mitigation solutions must be implemented. It is noted that the above examples are not exhausting and there may be further interference scenarios, and they are also not limiting for the present disclosure.

Self-interference mitigation can be addressed in various ways. To enable mono-static sensing, it may be useful to suppress the signals transmitted by the system itself. One approach to achieve this is through reference signal design which involves both waveform design and signal multiplexing patterns design.

For waveform design one can consider using waveforms that are orthogonal to the interference components or waveforms with low autocorrelation properties. This allows the receiver to better distinguish between self-interference and scattered signals. For example, Linear Frequency Modulation (LFM) signals have a sharp autocorrelation peak which makes it easier to separate the echoes from the self-interference. In terms of signal multiplexing patterns, the transmission and reception of sensing RS can be handled in either the frequency or time domain. For the frequency domain, separating the transmit and receive signals across different frequency bands or resources can help avoid direct interference. In the time domain, Time-Division Multiplexing (TDM) can be used, ensuring that transmission and reception of sensing RS do not overlap in time, thus minimizing simultaneous interference. Additionally, physical isolation is an effective method for reducing self-interference. By inserting an antenna isolation fence between the transmitting and receiving antennas, one can improve the isolation, enhances the antenna's radiation performance, and increases the antenna gain.

### Cross-interference mitigation

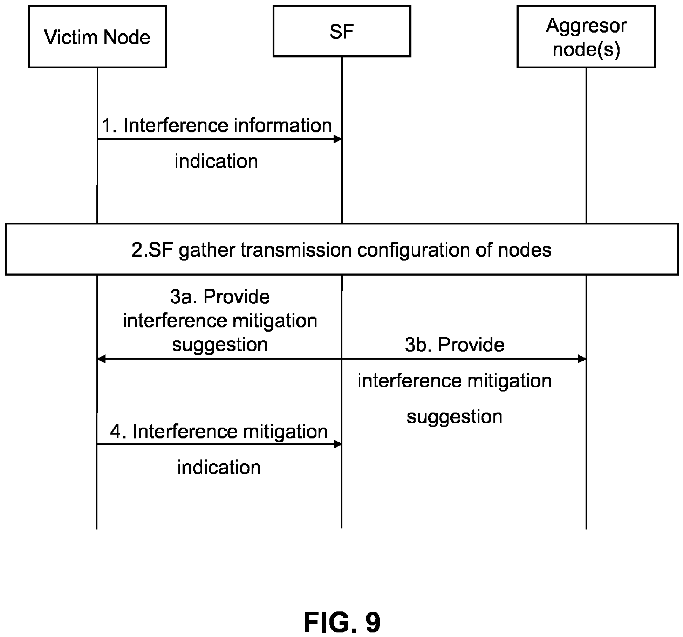

For the study of cross-interference mitigation, both interference between sensing and communication as well as interference between sensing nodes should be considered. A variety of approaches including coordinated resource allocation, spatial domain mitigation and power domain mitigation can be used for interference mitigation. Fig. 9 shows an example of procedures for ISAC interference mitigation with SF's coordination. Specifically, Fig. 9 shows exemplary interactions between a sensing function (SF) and a victim node and an aggressor node. It is noted that the term "aggressor node" does not necessarily imply that the node on purpose (e.g. jamming) interferes with the signals of the victim node. Rather, it is merely a name denoting the node that originates interference for another node that is denoted as a victim node.

In step1, the victim node sends interference information indication to SF, requesting an interference mitigation solution. The interference information indication may include victim resource ID, time stamp or time duration, Rx beam indication, and interference power.

In step 2, the SF gathers and coordinates transmission configurations of nodes. For example, the SF may receive information from further nodes in the proximity and evaluate the locations, transmission powers, beam directions, used resources and/or signal interferences between the nodes.

In step 3, the SF suggests interference mitigation solutions to the victim node (Sub-step 3a) and/or potential aggressor nodes (Substep 3b). For example, one or more of the following solutions may be provided:
- Coordinated resource allocation: the SF can assist in scheduling and allocating resources for the nodes to avoid strong interference.
- Spatial domain interference mitigation: SF can adjust the direction of the Tx and Rx beams to improve signal quality. This can involve adjusting the Tx beam direction to improve the received signal at the victim node, and adjusting the Rx beam to be orthogonal to the direction of the interfering signal. Specifically, the SF can provide preferred or non-preferred Tx beam information to the aggressor node, or it can provide preferred or non-preferred Rx beam information to the victim node.
- Power control interference mitigation: The SF can suggest adjustments to the transmission power that is either increasing the desired signal power at the victim node or reducing the interference power at the aggressor node. To achieve this, the SF can provide suggested power adjustment values to the node (victim node and/or aggressor node).

In step 4, after applying the interference mitigation solution, the victim node can further send an interference mitigation indication to the SF, informing whether the interference has been successfully mitigated of if further adjustments are needed.

### Sensing to communication interference scenario

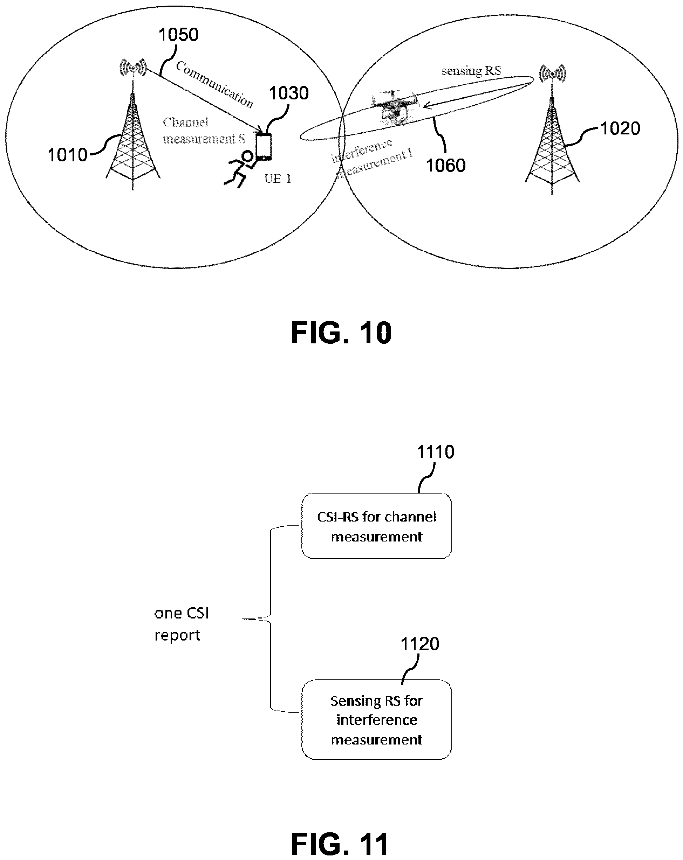

A sensing to communication interference scenario example is illustrated in Fig. 10. In 5G New Radio (NR), Channel State Information Reference Signals (CSI-RS) or CSI-Interference Measurement (CSI-IM) can be configured by a serving gNB (referred to as BS 1010) for a UE 1030 to facilitate interference measurement S during DL communication 1050. Specifically, one CSI report configuration can be associated to three CSI-RS configurations, where the first CSI-RS configuration is for channel measurement, and the other two are for interference measurement. It is noted that these specific features are only exemplary and for illustration. The CSI reporting may be configured in a different manner, there may be more than three configurations.

In ISAC systems, compared to NR communication scenario, new interference paths arise between sensing RS 1060 (transmitted in the example of Fig. 10 from the BS 1020 in a cell neighboring cell served by the BS 1010) and communication signals 1050. In such cases, the UE 1030 should be informed about the sensing RS configuration to enable accurate CSI measurement, e.g. for interference assessment.

A unified CSI framework for UE can be studied for various types of physical layer CSI measurement reports as is illustrated in Fig. 11, including cross-link interference measurement, interference from sensing to communication, and the traditional CSI measurement. Based on this framework, the SINR or CSI computation is based on the channel estimation S obtained from CSI-RS 1110 and the interference estimation I derived from sensing RS 1120. In case, when the RS for channel measurement is not configured, the sensing RS may be used only for interference measurement, and only the RSRP may be reported. Fig. 11 illustrated a general configuration in which one CSI report from a UE (or another kind of node) comprises a feedback obtained from measuring the CSI-RS 1110 as well as a feedback obtained from measuring sensing RS 1120.

It is noted that the interference mitigation approach described above with reference to Fig. 10 may still have some remaining issues. For example, the victim node may still be a victim even after step 3a, i.e. after interference mitigation suggestion or solutions to the victim node and/or to possible aggressor nodes was received and implemented. In other words, even after obeying the suggestions provided in step 3a by the SF, the interference at the victim node may still be too high. When referring to "too high" what is meant is higher than required by an application running on the victim node. Alternatively, the interference level of the victim node can be decreased unnecessarily, i.e. to a level lower than required. This is because interference tolerance and the current level of interference at the victim node may not be known by the SF. Thus, SF may not be able to coordinate the transmission parameters in an efficient let alone optimal way.

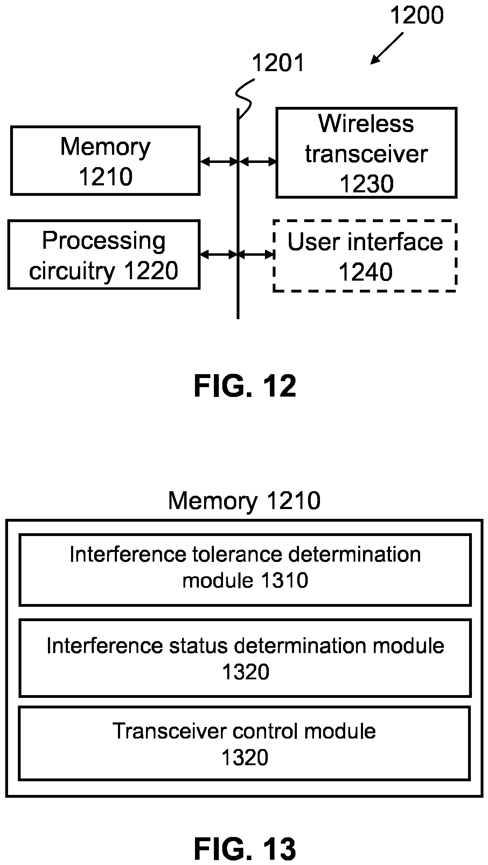

To address some of these shortcomings, in an embodiment, a wireless device 1200 is provided as illustrated in Fig. 12. The wireless device 1200 comprises a transceiver 1230 and a processing circuitry 1220. The processing circuitry is configured to determine an interference tolerance information indicating a requirement of the wireless device concerning interference. The transceiver 1230 is configured to transmit interference tolerance information to a central node for interference mitigation control.

For example, the processing circuitry 1230 may be configured to embed functional modules shown in Fig. 13, for instance an interference tolerance determination module 1310 and a transceiver control module 1330. The interference tolerance determination module 1310 is configured determine the interference tolerance. This may be performed, for example by obtaining information on the application that requires channel (communication and/or sensing) access and the requirements of the application on interference level. The transceiver control module 1330 is capable of controlling/configuring the transceiver to receive and/or transmit signals. These may be communication and/or sensing signals.

The transceiver 1230 may include a front end with one or more amplifier stages, up-conversion from the baseband processing to the target frequency band, or the like. The transceiver may further comprise a plurality of antennas for transmitting a communication signal, a sensing signal and/or an ISAC signal. However, it is noted that the wireless device does not necessarily include a plurality of antennas and it may have a single antenna. Furthermore, it is noted that transceiver 1230 does not have to comprise any antenna. Rather, it may comprise ports to which external antennas may be connected (possibly comprising portions of the front-end processing chain).

As is illustrated in Fig. 12, the wireless device 1200 may further comprise a bus 1201 over which the processing circuitry 1220 may communicate with the transceiver 1230 and possible other components. The possible other components may include a memory 1210. The memory may store program code, which when executed on the processing circuitry 1220, configures the processing circuitry to perform the functions as mentioned above, thereby embedding the modules of Fig. 13. The processing circuitry 1220 may communicate with the memory over the bus 601. It is noted that Fig. 12 is simplified. The processing circuitry may include one or more processors and/or programmable hardware or application specific hardware which may be integrated on one chip or separated. The memory 1210 may be integrated on a chip together with the processing circuitry 1220 or with one or more of its portions; or the memory 1210 may be integrated separately from the processing circuitry 1220. The memory 1210 may be a volatile memory or a non-volatile memory. The wireless device 1200 may further comprise a user interface 1240 enabling a user to enter some parameters and/or to obtain state of the device 1200. However, such user interface is not necessary for operation of the device 1200.

It is noted that the device 1200 is only exemplary. The present disclosure is not limited to any particular device structure. Correspondingly, methods are provided that include steps described herein as performed by some particular modules of the device 1200. Moreover, the present disclosure is not limited to any particular standardized device 1200 (such as 5G, 6G, or WiFi device) and may also be implemented in proprietary communication and sensing systems. On the other hand, the wireless device according to implementations described herein may be readily implemented in future systems such as WiFi 7 or higher and/or in 5G, 6G or higher.

As mentioned above, the processing circuitry 1230 may be configured to determine and to control the transceiver 1220 to transmit the interference tolerance information to the central node. With this information, the central node may be capable of constraining the interference mitigation suggestions to configurations that are likely to satisfy the interference requirements of the wireless device 1200 (victim node). In addition, the processing circuitry 1230 may be configured to determine an interference status information regarding interference currently experienced by the wireless device. Correspondingly, the transceiver may be configured to transmit the interference status information to a central node for the interference mitigation control.

It is noted that the interference tolerance information and the interference status information may be transmitted together in the same report to the central node. In this way, it is ensured that the central node has both information up to date. However, since the interference status information may change in different moments of time (and possibly more frequently) than the interference tolerance information, in some exemplary implementation it may be advantageous to provide the interference tolerance information and the interference status information in separate reports.

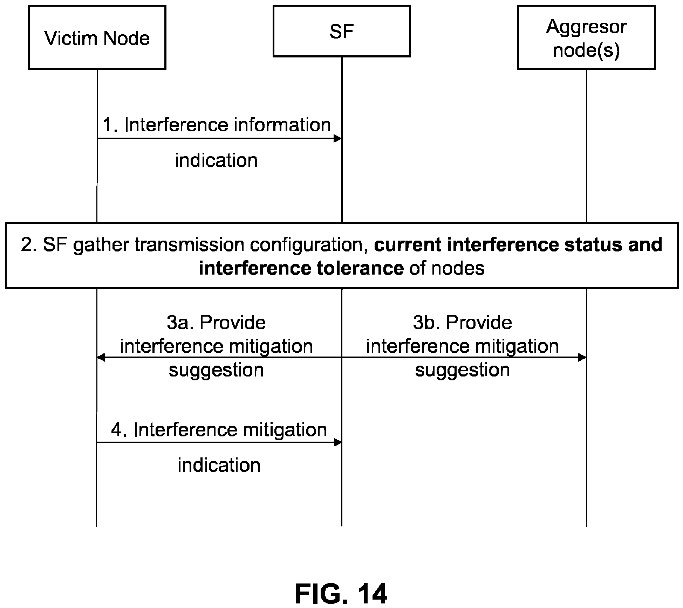

Fig. 14 shows an exemplary information exchange between the wireless device (which may be in a role as the victim node and/or as the aggressor node) and a central node (which may be the sensing function, SF, or another entity supporting control of interference mitigation). It is noted that when referring to interference mitigation, what is meant is interference reduction, as it is less likely that a complete elimination of the interference is achieved.

Fig. 14 is based on the approach exemplifies with reference to Fig. 9. Both are merely exemplary and the actual exchange of information may differ in some implementations.

As discussed above, while the SF tries to decrease the interference of the victim node, it may inadvertently cause increased interference to other users. Therefore, in the present disclosure one or more wireless devices (communication and/or sensing nodes) share the current interference status and interference tolerance with the central node (SF in Fig. 14) in step 1 or 2. Specifically, the victim node, aggressor node, and the central node may behave as follows.

In step1, interference information indication is transmitted from the victim node (wireless device) to the SF (central node). For example, in step 1 the victim node may send within the interference information to the central node its interference status and/or its interference tolerance. As mentioned above, the interference status and the interference tolerance may be transmitted within the same report or within separate reports. In step one it is possible, for instance, to send only the interference status information or only the interference tolerance information.

The transmission of the interference information to the SF may implicitly indicate to the SF that the originating wireless device (the victim node) request for interference mitigation solution. Alternatively, the request for interference mitigation may be embedded in the interference information explicitly. The interference information indication can include the following: victim resource ID, time stamp or a time duration, Rx beam indication, and/or interference power (corresponding to interference status information).

In step 2, the central node gathers and coordinate transmission configurations of nodes, including the current interference status and interference tolerances of nodes. As mentioned above, the victim node may send its current interference status and interference tolerance already in step 1 in some implementations. Alternatively, only one of the current interference status and interference tolerance (e.g. only the status) is transmitted in step 1 and the other one in step 2. Still alternatively, in step 1, the victim node may merely request the interference mitigation suggestion and send both the current interference status and the interference tolerance in step 2. In any case, the central node may, in step 2, gather the interference information and/or the transmission configuration from other nodes than the victim node, e.g. from aggressor nodes or the like.

It is noted that phase 2 represents information gathering in general - the actual reception of the information at the central node may occur at any time before or during the gathering step 2. For example, it is conceivable that the central node collects data from the nodes (victim and/or aggressor) in its reach and stores them. The gathering in step 2 may also include fetching from the storage. Moreover, the present disclosure is not limited to nodes reporting merely their own interference information. Rather, nodes may also relay interference information of other nodes. When referring to a node, the node means any node - victim, aggressor or central node. One node may also have all three features - it may be victim to interference from other nodes, it may itself be an aggressor node - i.e. generate interference for other odes, and it may also implement the central node function of collecting interference information from the nodes in the surroundings and providing them with information on how to reduce interference.

In step 3, the SF provides interference mitigation suggestions or solutions to victim node and/or to possible aggressor nodes. When referring to interference mitigation suggestions, one or more of the following may be provided:
- Coordinated resource allocation: An SF (a central node) can be involved in resource scheduling and allocation to avoid strong interference. For example, the central node may be a scheduling node such as a base station. In this case, the central node may, based on the received interference tolerance and/or status, allocate resources (e.g. in spatial domain, or e.g. in one or more of the spatial, frequency, and time domains) to the victim node. In addition or alternatively, the central node may allocate such resources to the aggressor nodes. In general, the central node may perform allocation of resources based on the interference information.
- Spatial domain interference mitigation: the direction of a Tx beam can be adjusted to improve the received performance of the desired signal or the direction of an Rx beam can be adjusted to be orthogonal to the direction of interference signal or the like. Specifically, the central node can provide preferred or non-preferred (to be avoided) Tx beam information to the aggressor node, and/or the central node can provide preferred or non-preferred Rx beam (or Tx beam) information to the victim node. For example, if beam directions are associated with an index, the central node may indicate one or more of the indices to the victim node or to the aggressor node, indicated preferred direction to be used (or that can be used). It is a matter of convention (e.g. standard) whether the preferred or to be avoided (non-preferred) beam directions are signaled.
- Power control interference mitigation: increase the desired signal power or reduce the Interference power. SF can provide suggested power adjustment value to the node to mitigate the interference.

In step 4, interference mitigation response: after applying interference mitigation solution, the victim node can further provide interference mitigation indication to SF. The present disclosure is not limited to any specific interference mitigation indication (feedback). For example, the interference mitigation indication may provide information information on whether the interference disappeared. Alternatively, the interference mitigation indication may provide information on whether the interference improved. Such indication is possible by a binary flag. However, the present disclosure is not limited by such binary indication. Rather, the interference mitigation indication may provide information in the interference, namely one or more of the parameters mentioned above as being possibly part of the interference information in step 1.

In order to assess whether or not the interference mitigation suggestion and/or control was successful, the wireless device may wait for a predefined time after reception of the interference mitigation suggestion in step 3 until sending the interference mitigation indication. It is noted that in step 1 or 2, the interference information (possibly including the interference status and the interference tolerance) can be transmitted in a dedicated manner to the central node. However, the present disclosure is not limited thereto as it is conceivable that the interference information can be broadcasted so that any node may be aware of other nodes' interference information.

In the following part, possible types of information gathered by the central node and application-specific interference and tolerance are exemplified. Note that these are mere examples to be considered, and not to limit the present disclosure.

### Types of information gathered and evaluated by the central node

As mentioned above, s current interference status of a node (or more nodes) can be gathered, i.e. received as interference status information from the respective node(s). Such interference status information may comprise, for instance:
- Interference Power Measurements: For example, instantaneous received interference power at the victim node may be measured and reported. The present disclosure is not limited to any specific measure reflecting the instantaneous received interference power, For example, it may be reported relatively to the received signal and may also comprise a noise component. For instance, signal to interference and noise ratio (SINR) may be reported, e.g. in dBm or dB.
   The interference power measurements may be performed over a certain time interval and reported by way of a statistical measure such as an average over a given time duration, e.g. to understand the long-term interference trends.
- Temporal Behavior: The interference status information may include time stamps of when interference peaks or remains constant. It may include time stamps indicating the time instance at which the measurement (e.g. the interference power measurement) was relevant or taken.
   In addition or alternatively, the temporal behavior may be for instance duration (or temporal character) of interference (e.g., periodic, bursty, or persistent interference).

As described above, the interference status alone may not be sufficient to suitably control the interference. Rather, interference tolerance information of one or more nodes may be reported.

There are many measures that may reflect the interference tolerance. Following are some exemplary and non-limiting examples:
- SINR Thresholds: the interference tolerance information includes an indicator indicating a minimum signal to interference-plus-noise ratio, SINR, required currently (at the time of generating or sending the information) by the wireless device. The minimum SINR required for reliable communication, may vary by application (e.g., 10 dB for video streaming vs. 3 dB for low-latency loT signaling, or the like). The reported threshold does not need to be on SINR, it can be SIR (signal to interference ratio).
- QoS Requirements: the interference tolerance information may include an indicator indicating Quality of Service, QoS, required currently by the wireless device. For example, application-specific tolerances like delay, jitter, packet error rate (PER), or bit error rate (BER), or the like may be reported.
Priority level of the victim node (e.g., critical control systems vs. background data) may be another parameter correlated with the type of application utilizing the channel and suffering from the interference.
- Maximum Allowable Interference Power: the interference tolerance information includes an indicator indicating a maximum allowable interference power required currently by the wireless device. For example, a defined threshold in dBm beyond which interference disrupts the node's operation.

It is noted that one or more (or all) of the above mentioned parameters (minimum SINR, maximum allowable interference, and QoS requirements may be reported by the wireless device (victim node) to the central node. Further or alternative parameters reflecting the interference tolerance may be indicated. The central node may estimate some of these parameters itself based on the signaling from the victim node. For example, the victim node may indicate its QoS requirement e.g. by application category, and the central node may derive the respective interference tolerance in terms of minimum SINR or maximum allowable interference power. However, the present disclosure is not limited to such an approach and the victim node may signal the minimum SINR and/or maximum allowable interference power as a value from a predefined value range.

As is clear to those skilled in the art, the signaling of the interference tolerance may be more efficient if e.g. ranges of the minimum required SINR (or maximum interference power or QoS parameters) are assigned indexes and the node(s) indicate only an index rather than a specific value. In general, said interference tolerance information is an indication of interference tolerance category out of a predefined set of categories, and each category is associated with a range of amount of interference. In other words, the present disclosure is not limited to any specific way of signaling.

Moreover, the central node may gather and evaluate transmission configurations of the respective one or more nodes. The transmission configurations may be reported to the central node and/or (some of them) measured by the central node. Some exemplary transmission configuration parameters that may help the central mode to generate the interference mitigation suggestions or control information.
- Tx/Rx Beam Directions: Current beamforming directions (e.g., using CSI for spatial domain adjustments). In other words, the central node may receive CSI from the victim node and use the CSI to generate its interference mitigation suggestions or control information. This may be particularly suitable for cases in which the central node is a base station or a general resource allocation (scheduling) entity.
- Power Levels: Current transmit power of both victim and aggressor nodes. This may be received within a report (feedback) from the respective node or the central node may try to estimate the value based on the ratio of reference signal power received and the signal power received from the respective node. Alternatively this parameter may be available to the central node, e.g. in case it is a scheduling node that controls the transmission power of the respective node(s).
- Resource Allocations: Allocated frequency, time slots, and sub-carriers for both victim and potential aggressors. This parameter may be signaled to the central node by the respective node, in general. However, in some specific scenarios, this parameter may be known (e.g. if the central node is the scheduling node that made the allocation of the resources to the respective node) or, in some scenarios, it may be estimated based on the presence of signal received from the direction of the respective node in the resources.

As described above, the interference tolerance may differ for various different applications. Thus, the interference tolerance information may include an indicator of a current application type, and the current application type is an indicator out of a set of predefined application type indicators, the set of predefined application type indicators comprising one or more of:
- loT application,
- Real-time communication,
- Streaming communication,
- Background communication,
- Industrial automation, and
- Autonomous vehicles.

In this way, an efficient signaling of the interference tolerance by way of application indication may be achieved. There may be further an assignment predefined (e.g. by a standard or preconfigured by a higher layer protocol such as RRC, radio resource control) between the application type and the respective interference requirement. The requirement may regard the minimum SINR or SIR, maximum interference power or may require specific interference duration / type (periodic, bursty, or the like).

For example, massive loT applications such as Smart Meters or Sensors may be characterized by generating a narrowband interference caused by overlapping sub-carriers or spectrum sharing with nearby loT nodes. The loT application has typically a high interference tolerance during non-critical updates but a low interference tolerance during emergency reporting (such as power outage detection or the like). Thus, when a central node receives an indication from a node that the node runs an loT application, it may derive the kind of interference the node is generating (as an aggressor node) and the kind of interference that the node is sensitive to and generate the interference suggestion or control information accordingly.

For example, real-time communication applications (such as Video Streaming, augmented reality or virtual reality, conversation services, or the like) may generate (or be subjected to) an adjacent channel interference due to insufficient guard bands or power leaks. Such applications have a low tolerance against interference. For example, the minimum SINR may be 10dB, so that SINR > 10 dB to ensure seamless playback. Moreover, since repetitions of erroneous packets may be limited due to the real-time nature of the service, there may be a requirement on error rate, such as packet loss < 1% to avoid visible degradation.

For example, industrial automation applications (e.g., factory control systems or the like) may produce a rather strong co-channel interference from high-density deployments of wireless sensors. On the other hand, they may have a low tolerance against interference e.g. due to safety and efficiency of the production. For example, SINR > 15 dB for ultra-reliable low-latency communication (URLLC). Latency < 1 ms may be required to ensure real-time operation.

For example, autonomous vehicles applications (e.g., V2X Communication) may generate dynamic interference and may be subject to dynamic interference from rapidly moving vehicles in the vicinity. The requirements include very low latency requirement (e.g. latency <10 ms) for safety-critical applications. There may be high requirements on minimum SINR, e.g. SINR > 12 dB for robust communication under high mobility.

The above examples of applications are not to limit the present disclosure. It is noted that further or different applications may be defined. Also, the values provided are only exemplary and may be set differently or refined based on specifics of the deployment of the applications.

### Behavior of a victim node / wireless device subject to interference

After the wireless device 1200 transmits its interference status and tolerance in step 1 and/or 2, its transceiver 1230 is configured to receive an interference mitigation information from the central node. Moreover, the processing circuitry 1220 is further configured to: amend transmission parameters of the wireless device according to the received interference mitigation information; and generate an interference mitigation report including the interference status current after amending the transmission parameters.

It is noted that amending the transmission parameters may not be always necessary: in case the central node does not provide any guidance that differs from the current settings, no amendment is necessary. However, the nodes (including victim nodes and aggressor nodes) should have the capability of adapting their transmission parameters according to the suggestions or control information from the central node. The wireless device (node) is a communication and/or sensing device. For example, it may be (in any of the embodiments described herein) a communication only device or sensing only device or device supporting both communication and sensing, or a device capable of ISAC.

The present disclosure may be deployed in various kinds of systems. For example, in an embodiment, the central node provides a mere suggestion to the nodes so that they can still decide whether or not to adapt their parameters accordingly. In another embodiment, the central node provides a control information to the nodes so that they have to obey the control information and adapt their parameters accordingly.

### Central node

As described with reference to Fig. 14, the central node (referred to in Fig. 14 as sensing function, SF) receives the interference status and tolerance information. An exemplary structure of the central node is shown in Fig, 15. The central node 1500 comprises a wireless transceiver 1530 and processing circuitry 1520. The transceiver 1530 is configured to receive, from each of a plurality of wireless devices:
- an interference status information regarding interference currently experienced by the wireless device, and
- an interference tolerance information indicating a requirement of the wireless device concerning interference.

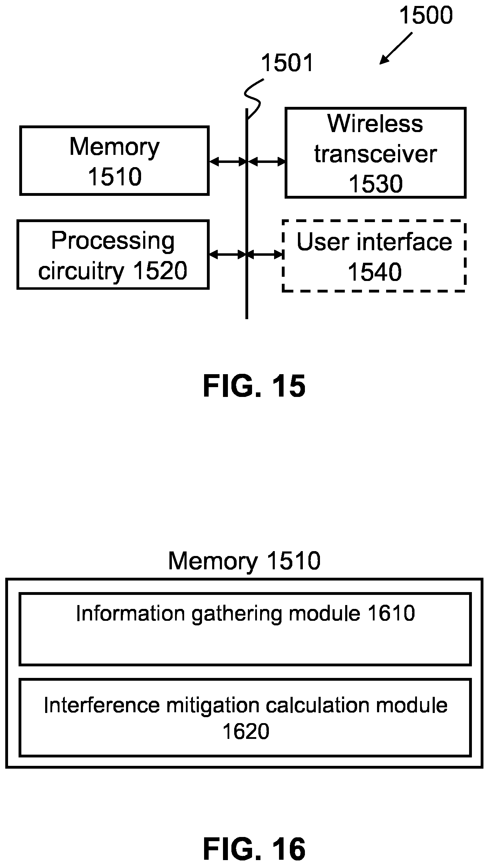

The processing circuitry 1520 is configured to generate interference mitigation information based on the interference status information and the interference tolerance information of all of the plurality of communication devices. Moreover, the processing circuitry 1520 is configured to cause the transceiver to transmit the interference mitigation information to each of the plurality of communication devices. Fig. 16 shows functional modules embodied by the processing circuitry. For example, an information gathering module 1610 gathers from the node the interference information. An interference mitigation calculation module 1620 computes the suggestions or control information to the respective nodes. Similarly to the structure of the wireless device described with reference to Figs. 12 and 13, the central node 1500 may further comprise a memory 1510 and, optionally, a user interface 1540. The memory may store code instructions corresponding to the functionality of the information gathering module 1610 and the interference mitigation calculation module 1620. When these code instructions are executed on the processing circuitry 1520, they perform the functionality of the central node described above. The transceiver 1530, the processing circuitry 1520, the memory, 1510, and possibly the user interface 1540 may communicate with each other via a bus 1501.

The present disclosure is not limited to any specific determination of the interference mitigation suggestion or control. In principle, any known approaches also used in scheduling may be used. For example, based on SINR and SINR tolerance, the central node may suggest higher transmission power to the victim node. However, how much higher it would be, can also depend on the other nodes' interference levels and tolerance. For example, the transmission power of the victim node is increased, it can be unnecessary (interference level can be much lower than the minimum acceptable) or affect other nodes (interference level of other nodes can be higher than they can handle). Also, the central node may suggest to other nodes to decrease their transmission power. In this case, the interference of the other nodes can be increased. A similar scenario can be applied for Tx beam direction or the like.

The interference mitigation information may be transmitted to individual users in separated messages, or it may be transmitted in a frame with a field for each node by MU-MIMO or it can be broadcasted/multicasted.

For example, the transceiver 1530 is further configured to receive, from at least one of the plurality of wireless devices, an interference mitigation report indicating the interference status current at said at least one wireless device after taking into account said interference mitigation information. The interference tolerance information received from the nodes has the same format as described above with reference to the nodes transmitting it.

It is noted that the central node may be any device or more generally any network function (may be performed in a distributed manner by more than one devices). The term sensing function, SF, employed in some examples merely reflects the function of the central node to sense information and signals from the victim nodes and the aggressor nodes. It does not imply that the central node has to perform or be capable of performing sensing (radar-like, using reflection of objects to localize them). The central node may be, in an advantageous implementation, a base station or a relay. However, the present disclosure is not limited thereto. As the central node received information regarding the interference from the nodes, it does not have to support higher layers to be aware of applications running on the nodes. The central node is referred to "central" merely because it centrally gathers information from two or more nodes. It can be a wireless device (e.g. a UE) as any other device, but configured to evaluate the interference information received from the surrounding devices.

The signaling of the interference status and tolerance information has been exemplified above based on the steps performed by the wireless device 1200 and the central node 1500. However, the present disclosure also provides the corresponding methods that may be performed by such devices (or simply by the processing circuitry 1220 or 1520).

With the approach described herein, a central node will have a knowledge of the current interference status of the victim node and other nodes. Accordingly, it will suggest the transmission parameters to them. Therefore, there will be more chances to mitigate the interference of the victim node. Also, while the interference of the victim node decreased, it can cause interference increase for other nodes. This issue can be prevented/reduced if the current status of the interferences and their interference tolerances is known. Some further benefits include:
- Avoiding unnecessary interference mitigation when the victim can tolerate the current interference.
- Preventing interference mitigation efforts that create collateral interference for other users.
- Ensuring or improving way towards optimal resource allocation, beam alignment, and power control tailored to the network's dynamic conditions.
- Enabling application-aware interference mitigation for diverse use cases like loT, real-time communication, and industrial automation.

The central node and wireless device implementations and the corresponding methods may be readily implemented in future systems such as WiFi 7 and higher and/or in 6G. The rise 6G applications has driven the need for systems integrating high data rate communication with accurate sensing.

### Implementations in software and hardware

It is noted that although embodiments and examples of the present disclosure were provided in terms of a method above, the corresponding devices (access points) providing the functionality described by the methods are also provided. Moreover, it is noted that any of the steps described above may be included as code instructions in a program, which may be executed by one or more processors.

The methodologies described herein may be implemented by various means depending upon the application. For example, these methodologies may be implemented in hardware, operation system, firmware, software, or any combination of two or all of them. For a hardware implementation, any processing circuitry may be used, which may include one or more processors. For example, the hardware may include one or more of application specific integrated circuits (ASICs), digital signal processors (DSPs), digital signal processing devices (DSPDs), programmable logic devices (PLDs), field programmable gate arrays (FPGAs), processors, controllers, any electronic devices, or other electronic circuitry units or elements designed to perform the functions described above.

If implemented as program code, the functions performed by the transmitting apparatus (device) may be stored as one or more instructions or code on a non-transitory computer readable storage medium. The computer-readable media includes physical computer storage media, which may be any available medium that can be accessed by the computer, or, in general by the processing circuitry. Such computer-readable media may comprise RAM, ROM, EEPROM, optical disk storage, magnetic disk storage, semiconductor storage, or other storage devices. Some particular and non-limiting examples include compact disc (CD), CD-ROM, laser disc, optical disc, digital versatile disc (DVD), Blu-ray (BD) disc or the like. Combinations of different storage media are also possible - in other words, distributed and heterogeneous storage may be employed.

The above examples are not to limit the present disclosure. There are many modifications and configurations, which may be used in addition or alternatively. This present disclosure can be used in any kind of device that is receiving signals over a wireless channel. The embodiments and exemplary implementations mentioned above show some non-limiting examples. It is understood that various modifications may be made without departing from the claimed subject matter. For example, modifications may be made to adapt the examples to new systems and scenarios without departing from the central concept described herein.

The described examples and embodiments can be implemented in any device, system or network that is capable of transmitting and receiving RF signals according to any of the wireless communication standards, including any of the IEEE 802.11 standards, the Bluetooth standard, code division multiple access (CDMA), wideband CDMA (W-CDMA), frequency division multiple access (FDMA), time division multiple access (TDMA), Terrestrial Trunked Radio (TETRA), Global System for Mobile communications (GSM), General Packet Radio Service (GPRS), Enhanced Data GSM Environment (EDGE), Evolution Data Optimized (EV-DO), 1xEV-DO, EV-DO Rev A, EV-DO Rev B, High Speed Packet Access (HSPA), High Speed Downlink Packet Access (HSDPA), High Speed Uplink PacketAccess (HSUPA), Evolved High Speed Packet Access (HSPA+), Long Term Evolution (LTE), or other known signals that are used to communicate within a wireless, cellular or loT network, such as a system utilizing 3G, 4G, or 5G, or further implementations thereof, technology. The present disclosure may be particularly suitable for ISAC related standards.

### Selected embodiments and examples

Summarizing, the present disclosure relates to support for interference reduction in a communication and/or sensing network. In particular, a node determines an interference status information regarding interference currently experienced by the wireless device, and an interference tolerance information indicating a requirement of the wireless device concerning interference. Then the node transmits the interference status information and the interference tolerance information to a central node for interference mitigation control.

According to a first aspect, a wireless device is provided comprising a processing circuitry and a transceiver. The processing circuitry is configured to determine an interference status information regarding interference currently experienced by the wireless device, and an interference tolerance information indicating a requirement of the wireless device concerning interference. The transceiver is configured to transmit the interference status information and the interference tolerance information to a central node for interference mitigation control.

According to a second aspect, further to the first aspect, the interference tolerance information includes an indicator indicating a minimum signal to interference-plus-noise ratio, SINR, required currently by the wireless device.

According to a third aspect, further to the first or the second aspect, the interference tolerance information includes an indicator indicating Quality of Service, QoS, required currently by the wireless device.

According to a fourth aspect, further to any of the first to the third aspect, the interference tolerance information includes an indicator indicating a maximum allowable interference power required currently by the wireless device.

According to a fifth aspect, further to any of the first to the fourth aspect, said interference tolerance information is an indication of interference tolerance category out of a predefined set of categories, and each category is associated with a range of amount of interference.

According to a sixth aspect, further to any of the first to the fifth aspect, the interference tolerance information includes an indicator of a current application type, and the current application type is an indicator out of a set of predefined application type indicators. The set of predefined application type indicators comprises one or more of loT application, real-time communication, streaming communication, background communication, industrial automation, and autonomous vehicles.

According to a seventh aspect, further to any of the first to the sixth aspect, the transceiver is configured to receive an interference mitigation information from the central node and the processing circuitry is further configured to amend transmission parameter of the wireless device according to the received interference mitigation information and to generate an interference mitigation report including the interference status current after amending the transmission parameters.

According to an eighth aspect, further to any of the first to the seventh aspect, the wireless device is a communication and/or sensing device.

According to a ninth aspect, a central node device is provided comprising a transceiver and a processing circuitry. The transceiver is configured to receive, from each of a plurality of wireless devices, an interference status information regarding interference currently experienced by the wireless device, and an interference tolerance information indicating a requirement of the wireless device concerning interference. The processing circuitry is configured to generate interference mitigation information based on the interference status information and the interference tolerance information of all of the plurality of communication devices, and cause the transceiver to transmit the interference mitigation information to each of the plurality of communication devices.

According to a tenth aspect, further to the ninth aspect, the transceiver is further configured to receive, from at least one of the plurality of wireless devices, an interference mitigation report indicating the interference status current at said at least one wireless device after taking into account said interference mitigation information.

According to an eleventh aspect, further to the ninth or the tenth aspect, the interference tolerance information includes at least one of an indicator indicating a minimum signal to interference-plus-noise ratio, SINR, required currently by the wireless device, and an indicator indicating Quality of Service, QoS, required currently by the wireless device, and an indicator indicating a maximum allowable interference power required currently by the wireless device.

According to a twelfth aspect, further to the eleventh aspect, said interference tolerance information is an indication of interference tolerance category out of a predefined set of categories, and each category is associated with a range of amount of interference.

According to a thirteenth aspect, further to any of the eleventh to the twelfth aspect, the interference tolerance information includes an indicator of a current application type, and the current application type is an indicator out of a set of predefined application type indicators, the set of predefined application type indicators comprising one or more of loT application, real time communication, streaming communication, background communication, industrial automation, and autonomous vehicles.

According to a fourteenth aspect, a method is provided for being performed at a wireless device. The method comprises determining an interference status information regarding interference currently experienced by the wireless device, determining an interference tolerance information indicating a requirement of the wireless device concerning interference, and transmitting the interference status information and the interference tolerance information to a central node for interference mitigation control.

According to a fifteenth aspect, a method is provided for being performed at a central node. The method comprises receiving from each of a plurality of wireless devices an interference status information regarding interference currently experienced by the wireless device, and an information interference tolerance information indicating a requirement of the wireless device concerning interference, and the method comprises generating interference mitigation information based on the interference status information and the interference tolerance information of all of the plurality of communication devices, and causing the transceiver to transmit the interference mitigation information to each of the plurality of communication devices.

Moreover, the corresponding methods are provided including steps performed by any of the above-mentioned processing circuitry implementations.

Still further, a computer program is provided, stored on a non-transitory medium, and comprising code instructions which when executed by a computer or by a processing circuitry, performs steps of any of the above-mentioned methods.

According to some embodiments, the processing circuitry and/or the transceiver is embedded in an integrated circuit, IC. Any of the apparatuses of the present disclosure may be embodied on an integrated chip.

Any of the above-mentioned embodiments and exemplary implementations may be combined.

Although the disclosed subject matter has been described in detail for the purpose of illustration based on what is currently considered to be the most practical and preferred embodiments, it is to be understood that such detail is solely for that purpose and that the disclosed subject matter is not limited to the disclosed embodiments, but, on the contrary, is intended to cover modifications and equivalent arrangements that are within the spirit and scope of the appended claims. For example, it is to be understood that the presently disclosed subject matter contemplates that, to the extent possible, one or more features of any embodiment can be combined with one or more features of any other embodiment.

## Claims

1. A wireless device comprising:
processing circuitry configured to determine:
- an interference status information regarding interference currently experienced by the wireless device, and
- an interference tolerance information indicating a requirement of the wireless device concerning interference; and
transceiver configured to transmit the interference status information and the interference tolerance information to a central node for interference mitigation control.

2. The wireless device according to claim 1, wherein the interference tolerance information includes an indicator indicating a minimum signal to interference-plus-noise ratio, SINR, required currently by the wireless device.

3. The wireless device according to claim 1 or 2, wherein the interference tolerance information includes an indicator indicating Quality of Service, QoS, required currently by the wireless device.

4. The wireless device according to any of claims 1 to 3, wherein the interference tolerance information includes an indicator indicating a maximum allowable interference power required currently by the wireless device.

5. The wireless device according to any of claims 1 to 4, wherein
said interference tolerance information is an indication of interference tolerance category out of a predefined set of categories, and
each category is associated with a range of amount of interference.

6. The wireless device according to any of claims 1 to 5, wherein
the interference tolerance information includes an indicator of a current application type, and
the current application type is an indicator out of a set of predefined application type indicators, the set of predefined application type indicators comprising one or more of:
- loT application,
- Real-time communication,
- Streaming communication,
- Background communication,
- Industrial automation, and
- Autonomous vehicles.

7. The wireless device according to any of claims 1 to 6, wherein
the transceiver is configured to receive an interference mitigation information from the central node; and
the processing circuitry is further configured to:
- amend transmission parameters of the wireless device according to the received interference mitigation information;
- generate an interference mitigation report including the interference status current after amending the transmission parameters.

8. The wireless device according to any of claims 1 to 7, wherein the wireless device is a communication and/or sensing device.

9. A central node device comprising:
transceiver configured to receive, from each of a plurality of wireless devices:
- an interference status information regarding interference currently experienced by the wireless device, and
- an interference tolerance information indicating a requirement of the wireless device concerning interference; and
processing circuitry configured to:
- generate interference mitigation information based on the interference status information and the interference tolerance information of all of the plurality of communication devices, and
- cause the transceiver to transmit the interference mitigation information to each of the plurality of communication devices.

10. The central node device according to claim 9, wherein the transceiver is further configured to receive, from at least one of the plurality of wireless devices, an interference mitigation report indicating the interference status current at said at least one wireless device after taking into account said interference mitigation information.

11. The central node according to claim 9 or 10, wherein the interference tolerance information includes at least one of:
- an indicator indicating a minimum signal to interference-plus-noise ratio, SINR, required currently by the wireless device, and
- an indicator indicating Quality of Service, QoS, required currently by the wireless device, and
- an indicator indicating a maximum allowable interference power required currently by the wireless device.

12. The central node according to claim 11, wherein
said interference tolerance information is an indication of interference tolerance category out of a predefined set of categories, and
each category is associated with a range of amount of interference.

13. The central node according to any of claims 11 to 12, wherein
the interference tolerance information includes an indicator of a current application type, and
the current application type is an indicator out of a set of predefined application type indicators, the set of predefined application type indicators comprising one or more of:
- loT application,
- Real-time communication,
- Streaming communication,
- Background communication,
- Industrial automation, and
- Autonomous vehicles.

14. A method for being performed at a wireless device, the method comprising:
determining an interference status information regarding interference currently experienced by the wireless device;
determining an interference tolerance information indicating a requirement of the wireless device concerning interference; and
transmitting the interference status information and the interference tolerance information to a central node for interference mitigation control.

15. A method for being performed at a central node, the method comprising:
receiving from each of a plurality of wireless devices:
- an interference status information regarding interference currently experienced by the wireless device, and
- an interference tolerance information indicating a requirement of the wireless device concerning interference; and
generating interference mitigation information based on the interference status information and the interference tolerance information of all of the plurality of communication devices, and
causing the transceiver to transmit the interference mitigation information to each of the plurality of communication devices.
